# EUROPEAN PATENT APPLICATION

(11) **EP 2 738 917 A2**
(43) Date of publication of application: **04.06.2014**
(21) Application number: 13194436.5
(22) Date of filing: 26.11.2013
(51) Int. Cl.: H02K 3/52

(54) **Power line connecting structure of a stator**

(30) Priority: 30.11.2012 JP 2012263637
(71) Applicant: Sanyo Denki Co., Ltd., Tokyo 170-8451 (JP)
(72) Inventor: Miura, Yukio, Tokyo, 170-8451 (JP); Uchiyama, Kazuyoshi, Tokyo, 170-8451 (JP); Yoda, Kazuhiro, Tokyo, 170-8451 (JP)
(74) Representative: McCartney, Jonathan William

(57) **Abstract**

A simple structure which improves reliability of connection and secures creeping and spatial distances for electrical insulation without increasing manufacturing cost is provided. Feed-through terminals whose diameters can be reduced are bonded to lands of a wiring substrate, and insertion terminals are bonded to core wires of lead wires. The insertion terminals of the lead wires are arranged in the feed-through terminals bonded to the lands. In a state where the feed-through terminals are swaged and the insertion terminals of the lead wires are pressure-bonded, the insertion terminals of the lead wires are bonded to the feed-through terminals.

## Description

### BACKGROUND

### 1. Technical Field

The invention relates to a structure which connects power lines to a wiring substrate which a stator of a motor has.

### 2. Description of Related Arts

Winding start ends or terminal ends of insulating coating electric wires wound around a stator core of a motor, and power lines from a power source are connected through a printed circuit board.

As the power lines, lead wires whose core wires such as copper wires are coated by cylindrical electrical insulating members are generally used. Structures which connect lead wires to a printed circuit board include a structure which directly connects lead wires to a printed circuit board and a structure which indirectly connects lead wires to a printed circuit board through connectors.

In the structure which directly connects the lead wires to the printed circuit board, core wires of the lead wires are directly inserted in through-holes provided on the printed circuit board and soldered, and vicinities of bonding portions of the lead wires are folded and arranged along the printed circuit board.

Meanwhile, in the structure which indirectly connects the lead wires to the printed circuit board through the connectors, female or male connectors are soldered to wiring patterns of the printed circuit board, and male or female connectors of the core wires are soldered to the lead wires to connect and reliably conduct the connectors.

As a technique related to a structure which connects lead wires to a wiring substrate, a connecting structure in which terminal portions of lead wires are soldered to lead soldering land portions of first and second pattern lands of a broken substrate, third and fourth pattern lands are provided to front ends of resist-coated conduction patterns of a bottom surface of the wiring substrate, the wiring substrate is set on a wiring substrate support portion with the broken substrate interposed and is jointly fastened and fixed by screws, and the first pattern land and the third pattern, and the second pattern land and the fourth pattern land are pressure-bonded is disclosed (see, for example, Japanese Patent Application Laid-Open No. 2009-283613).

Meanwhile, according to a conventional structure which directly connects lead wires to a printed circuit board, after core wires of lead wires are soldered in through-holes of the printed circuit board, the core wires of the lead wires are bent and adjusted along the printed circuit board. Therefore, a connecting operation requires more time and man-hour, and a manufacturing cost increases.

Further, soldering on a thin copper film on a printed circuit board brings a concern that adhesion of the substrate and the copper film is damaged due to heat of a soldering iron and the copper film is peeled, and therefore reliability of connection decreases.

Further, when a load or vibration is applied to lead wires, the load or vibration is directly applied to bonding portions of core wires, and there is a concern that the core wires are fractured by fatigue, therefore reliability of connection decreases.

Meanwhile, according to a structure which indirectly connects lead wires to a printed circuit board through connectors, a pair of connectors is interposed between lead wires and the printed circuit board, the number of parts increases and manufacturing cost increases.

Further, the connectors adopt a detachable structure, and therefore causes contact failure due to vibration of a motor and a decrease in reliability of connection.

Furthermore, terminal pitches of the connectors are determined, and therefore pattern intervals are determined according to the terminal pitches. Hence, creeping and spatial distances for electrical insulation are restricted by the pattern intervals, and therefore it is difficult to secure creeping and spatial distances determined according to a safety standard.

Further, although a broken substrate is used instead of connectors according to the technique of Japanese Patent Application Laid-Open No. 2009-283613, so that it is possible to reduce cost and overcome connection failure by way of joint fastening, a connecting structure is complicated.

### SUMMARY

The invention is created in light of the above situation, and an object of the invention is to provide a power line connecting structure of a stator which adopts a simple structure, and which can improve reliability of connection and secure creeping and spatial distances for electrical insulation without increasing manufacturing cost.

A power line connecting structure of a stator according to the invention which achieves the above object is a structure which connects a lead wire as a power line to a wiring substrate which a stator has.

A feed-through terminal whose diameter can be reduced is bonded to a land of the wiring substrate, and a core wire of the lead wire is arranged in the feed-through terminal bonded to the land.

In a state where the feed-through terminal is swaged and a coated portion and the core wire of the lead wire are pressure-bonded, the core wire of the lead wire is bonded to the feed-through terminal.

In the power line connecting structure of a stator according to the invention, core wires of lead wires are arranged in feed-through terminals bonded to lands of a wiring substrate. In a state where feed-through terminals are swaged and coated portions and the core wires of the lead wires are pressure-bonded, the core wires of the lead wires are bonded to the feed-through terminals.

In the power line connecting structure of the stator according to the invention, the feed-through terminals support the coated portions of the lead wires, so that it is possible to prevent the core wires from being fractured because a load applied to the lead wires is received on the coated portions and improve reliability of connection.

Further, the power line connecting structure adopts a simple structure in which the feed-through terminals whose diameters can be reduced are bonded to the lands of the wiring substrate, and, consequently, can provide a high degree of freedom of design and secure creeping and spatial distances for electrical insulation without increasing manufacturing cost.

### BRIEF DESCRIPTION OF THE DRAWINGS

FIG. 1 is a perspective view of a power line connecting structure of a stator according to a first embodiment;
FIG. 2 is an enlarged view of main parts in FIG. 1;
FIG. 3 is a perspective view of a power line connecting structure of a stator according to a second embodiment; and
FIG. 4 is an enlarged view of main parts in FIG. 3.

### DETAILED DESCRIPTION

A power line connecting structure of a stator according to a first embodiment and a second embodiment will be described below with reference to the drawings. In addition, the power line connecting structure of the stator according to the first embodiment and the second embodiment will be described using a stator of a stepping motor as an example.

The power line connecting structure according to the first embodiment and the second embodiment is a structure which connects lead wires as power lines to a wiring substrate which the stator has.

In the power line connecting structure according to the first embodiment, core wires of the lead wires are arranged in feed-through terminals which are bonded to lands of the wiring substrate and whose diameters can be reduced, and the core wires of the lead wires are bonded to the feed-through terminals in a state where the feed-through terminals are swaged and coated portions and the core wires of the lead wires are pressure-bonded.

In the power line connecting structure according to the second embodiment, insertion terminals bonded to lead wires are arranged in feed-through terminals which are bonded to lands of a wiring substrate and whose diameters can be reduced, and the insertion terminals of the lead wires are bonded to the feed-through terminals in a state where the feed-through terminals are swaged and the insertion terminals of the lead wires are pressure-bonded.

According to configurations of the first embodiment and the second embodiment, it is possible to realize a power line connecting structure of a stator which adopts a simple structure, and can improve reliability of connection and secure creeping and spatial distances for electrical insulation without increasing manufacturing cost.

### [First Embodiment]

### <Configuration of Power Line Connecting Structure of Stator>

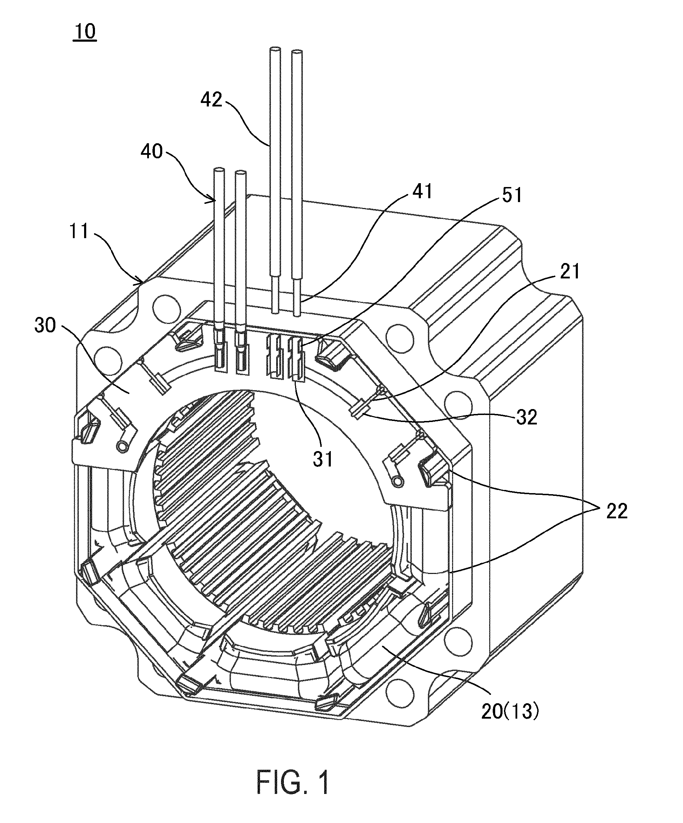

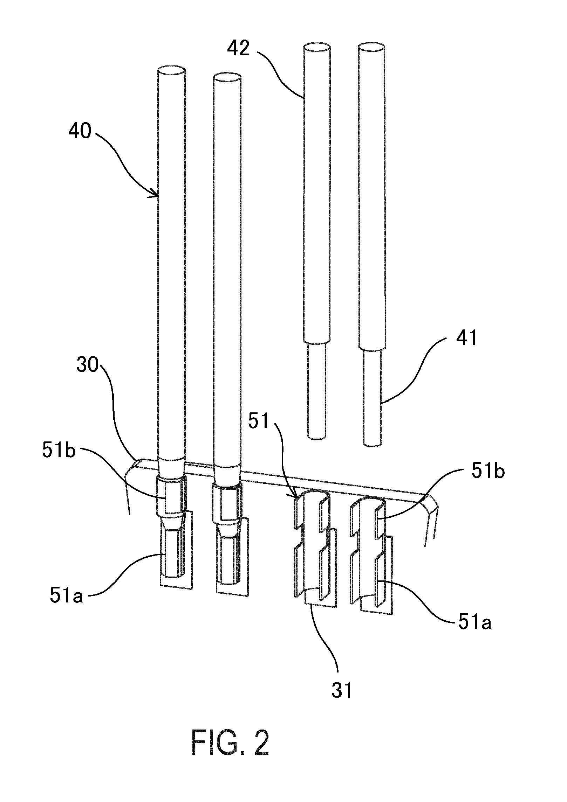

First, a power line connecting structure of a stator according to the first embodiment will be described with reference to FIGS. 1 and 2. FIG. 1 is a perspective view of the power line connecting structure of the stator according to the first embodiment. FIG. 2 is an enlarged view of main parts in FIG. 1.

As illustrated in FIG. 1, for example, a stator core 11 of a stator 10 of a stepping motor has a plurality of polar teeth 13. A plurality of coils 20 is formed by winding insulating coating electric wires 21 such as enamel wires around polar teeth 13. Poles of the coils 20 are connected by jumper wires 22 to form respective phases of the motor. A winding start end or terminal end of the insulating coating electric wire 21 of the coil 20 of each phase is connected with a power line 40 from a power source on a wiring substrate 30.

Although a printed circuit board on which wiring patterns are formed by a photolithography technique is used as the wiring substrate 30 according to the present embodiment, the wiring substrate is not limited to this, and a wiring substrate on which wiring patterns are formed by a thin copper plate may be used.

As the power line 40 according to the present embodiment, a lead wire whose core wire 41 such as a copper wire is coated by a cylindrical electrical insulating member (coated portion) 42 is used (referred to as a "lead wire" below).

A feed-through terminal 51 whose diameter can be reduced by pressuring means such as a swaging machine is bonded to the power line connecting land 31 of the wiring substrate 30. The feed-through terminal 51 is bonded along the wiring substrate 30 in a state where a blocked portion (back portion) of the feed-through terminal 51 is placed in contact with the power line connecting land 31 of the wiring substrate 30. Bonding means for the feed-through terminals 51 includes means such as soldering, welding, adhesion and thermal pressure-bonding. Although the bonding means is not limited, soldering is generally used.

The feed-through terminal 51 according to the present embodiment is formed as a U-shaped terminal whose at least one side is opened. The diameter of the feed-through terminals 51 only needs to be able to be reduced by pressuring means, and a terminal shape is not limited to a U shape.

Further, as illustrated in FIG. 2, the feed-through terminal 51 according to the present embodiment has core wire pressure-bonding pieces 51a which pressure-bond the core wire 41 of the lead wire 40, and coated portion pressure-bonding pieces 51b which pressure-bond a coated portion 42 of the lead wire 40.

As illustrated in FIGS. 1 and 2, after the feed-through terminal 51 is bonded to the land 31 of the wiring substrate 30, the core wire 41 of the lead wire 40 is arranged in the feed-through terminal 51. After the core wire 41 of the lead wire 40 is arranged in the feed-through terminal 51, the core wire pressure-bonding pieces 51a and the coated portion pressure-bonding pieces 51b of the feed-through terminal 51 are pressuredby the pressuring means such as a swagingmachine, and are swaged. By swaging the feed-through terminal 51, the diameter of the feed-through terminal 51 is reduced.

When the diameter of the feed-through terminal 51 is reduced, the core wire 41 of the leadwire 40 is pressure-bonded by the core wire pressure-bonding pieces 51a of the feed-through terminal 51. Further, the coated portion 42 of the lead wire 40 is pressure-bonded by the coated portion pressure-bonding pieces 51b of the feed-through terminal 51.

In a state where the coated portion 42 and the core wire 41 of the lead wire 40 are pressure-bonded by the feed-through terminal 51, the core wire 41 of the lead wire 40 is bonded to the feed-through terminal 51. Although the bonding means for the core wires 41 of the lead wires 40 and the feed-through terminals 51 are not limited in particular, soldering is generally used.

In addition, a winding start end or terminal end of the insulating coating electric wire 21 of the coil 20 of each phase is bonded to the land 32 of the insulating coating electric wire of the wiring substrate 30. The insulating coating electric wire 21 of the coil 20 and the power line 40 are connected through a wiring pattern on the wiring substrate 30.

### <Operation of Power Line Connecting Structure of Stator>

Next, an operation of the power line connecting structure of the stator according to the first embodiment will be described with reference to FIGS. 1 and 2.

As illustrated in FIG. 1, in the power line connecting structure of the stator according to the first embodiment, the core wires 41 of the lead wires 40 are arranged in the feed-through terminals 51 soldered to the lands 31 of the wiring substrate 30. The feed-through terminal 51 is swaged and the core wire 41 of the lead wire 40 is pressure-bonded by the core wire pressure-bonding pieces 51a of the feed-through terminal 51, and the coated portion 42 of the lead wire 40 is pressure-bonded by the coated portion pressure-bonding pieces 51b.

In a state where the coated portion 42 and the core wire 41 of the lead wire 40 are pressure-bonded, the core wire 41 of the lead wire 40 is soldered to the feed-through terminal 51.

In the power line connecting structure of the stator according to the first embodiment, the coated portions 42 of the lead wires 40 are supported by the coated portion pressure-bonding pieces 51b of the feed-through terminals 51, so that it is possible to prevent the core wires 41 from being fractured because a load applied to the lead wires 40 is received on the coated portions 42, and improve reliability of power line connection.

Further, the core wires 41 of the lead wires 40 are bonded to the lands 31 of the wiring substrate 30 through the feed-through terminals 51, so that it is possible to prevent the wiring patterns of the wiring substrate 30 from being peeled or thermally damaged and improve reliability of power line connection.

Furthermore, a simple structure in which the feed-through terminals 51 whose diameters can be reduced are bonded to the lands 31 of the wiring substrate 30 and the feed-through terminals 51 are swaged is adopted, so that it is possible to provide a high degree of freedom of design and secure creeping and spatial distances for electrical insulation without increasing manufacturing cost. Consequently, it is easy to take a measure which is designated according to the safety standard and which includes, for example, securing creeping and spatial distances.

It is not necessary to bend the core wires 41 of the lead wires 40 along the wiring substrate 30 and, consequently, it is possible to reduce time or man-hour to bend the lead wires 40.

Further, in a state where the coated portions 42 and the core wires 41 of the lead wires 40 are pressure-bonded by the feed-through terminals 51, the core wires 41 of the lead wires 40 are soldered to the feed-through terminals 51, so that operability of power line connection is good and reliable conduction is performed.

Furthermore, connection positions are determined by the feed-through terminals 51, so that it is easy to automate an operation of connecting the lead wires 40.

In addition, a mode has been described with the first embodiment where the feed-through terminals 51 whose diameters can be reduced are bonded to the lands 31 of the wiring substrate 30 which the stator 10 has, the core wires 41 of the lead wires 40 are arranged in the feed-through terminals 51 bonded to the lands 31 and, in a state where the feed-through terminals 51 are swaged and the coated portions 42 and the core wires 41 of the lead wires 40 are pressure-bonded, the core wires 41 of the lead wires 40 are bonded to the feed-through terminals 51. In another mode, terminals may be bonded to core wires of the lead wires 40, terminals of the lead wires 40 are arranged in the lands 31 of the wiring substrate 30, and these terminals are directly bonded to the lands 31 by soldering or welding without using the feed-through terminals 51 according to the first embodiment.

### [Second Embodiment]

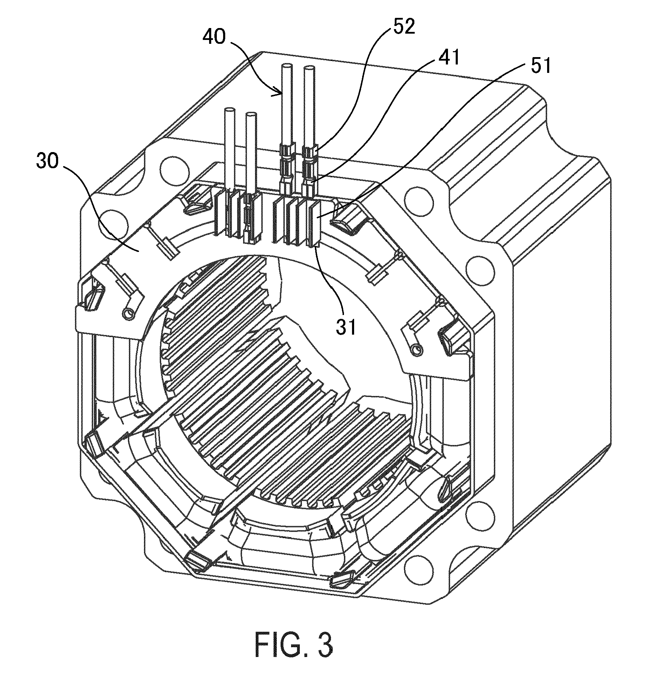

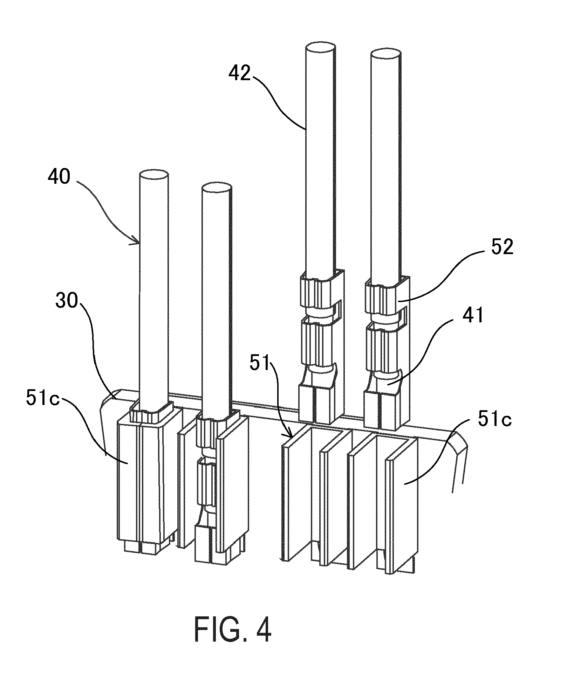

Next, a power line connecting structure of a stator according to the second embodiment will be described with reference to FIGS. 3 and 4. FIG. 3 is a perspective view of the power line connecting structure of the stator according to the second embodiment. FIG. 4 is an enlarged view of main parts in FIG. 3.

As illustrated in FIG. 3, the power line connecting structure of the stator according to the second embodiment differs from that of the first embodiment in that insertion terminals 52 are swaged and fixed on coated portions and core wires 41 of lead wires 40 and pressure-bonded to the feed-through terminals 51.

That is, in the power line connecting structure of the stator according to the second embodiment, the feed-through terminals 51 whose diameters can be reduced by pressuring means such as a swaging machine are bonded to the power line connecting lands 31 of the wiring substrate 30. Meanwhile, the insertion terminals 52 are bonded to the coated portions and the core wires 41 of the lead wires 40 to pressure-bond the coated portions and the core wires 41.

Similar to the first embodiment, the feed-through terminals 51 according to the present embodiment are formed as U-shaped terminals whose at least one sides are opened. The diameter of the feed-through terminal 51 only needs to be able to be reduced by the pressuring means, and a terminal shape is not limited to a U shape.

In a state where blocked portions (back portions) of the feed-through terminals 51 are placed in contact with the power line connecting lands 31 of the wiring substrate 30, the feed-through terminals 51 are bonded along the wiring substrate30. Although the bonding means for the feed-through terminal 51 is not limited, general soldering is used.

As illustrated in FIG. 4, the insertion terminals 52 according to the present embodiment are swaged and fixed to, for example, sandwich surroundings of the core wires 41 and the coated portions 42 of the lead wires 40. Although the insertion terminals 52 hold fast the core wire 41 and the coatedportions 42 of the lead wires 40, the insertion terminals 52 are preferably bonded to the core wires 41 of the lead wires 40 to secure conduction. Although the bonding means for the insertion terminals 52 is not limited, pressure-bonding is used.

As illustrated in FIGS. 3 and 4, after the feed-through terminals 51 are bonded to the lands 31 of the wiring substrate 30, the insertion terminals 52 of the leadwires 40 are arranged in the feed-through terminals 51. After the insertion terminals 52 of the lead wires 40 are arranged in the feed-through terminals 51, the feed-through terminals 51 are swaged by the pressuring means such as a swaging machine. By swaging the feed-through terminals 51, diameters are reduced such that pressure-bonding pieces 51c of the feed-through terminals 51 cover the insertion terminals 52.

When the diameters of the feed-through terminals 51 are reduced, the pressure-bonding pieces 52c of the feed-through terminals 51 pressure-bond the insertion terminals 52 of the lead wires 40. In a state where the insertion terminals 52 of the lead wires 40 are pressure-bonded by the feed-through terminals 51, the insertion terminals 52 of the lead wires 40 are bonded to the feed-through terminals 51. Although the bonding means for the insertion terminals 52 and the feed-through terminals 51 of the lead wires 40 is not limited, general soldering is used.

The power line connecting structure of the stator according to the second embodiment provides basically the same operation and function as those in the first embodiment. According to the power line connecting structure of the stator according to the second embodiment in particular, the insertion terminals 52 are bonded to the core wires 41 of the lead wires 40, so that it is possible to provide a unique effect of protecting the core wires 41 of the lead wires 40, and pressure-bonding the insertion terminals 52 by the feed-through terminals 51 and holding fast the lead wires 40.

In addition, although the feed-through terminals 51 whose diameters can be reduced have been described in the second embodiment, feed-through terminals whose diameters are hardly reduced may be adopted as long as the feed-through terminals can sandwich and hold fast the insertion terminals 52. In this case, a retainingmechanism is preferablyprovided to the feed-through terminals 51 or the insertion terminals 52 such that the insertion terminals 52 are not pulled out from the feed-through terminals 51 in an insertion direction.

Although preferred embodiments of the invention have been described above, these embodiments are exemplary for description of the invention, and are not intended to limit the scope of the invention only to the embodiments. The invention can be implemented in various modes different from the above embodiments in a range which does not deviate from the scope of the invention.

## Claims

1. A power line connecting structure of a stator which is a structure which connects a lead wire as a power line to a wiring substrate which the stator comprises, wherein
a feed-through terminal whose diameter can be reduced is bonded to a land of the wiring substrate, and a core wire of the lead wire is arranged in the feed-through terminal bonded to the land, and
in a state where the feed-through terminal is swaged and a coated portion and the core wire of the lead wire are pressure-bonded, the core wire of the lead wire is bonded to the feed-through terminal.

2. A power line connecting structure of a stator which is a structure which connects a lead wire as a power line to a wiring substrate which the stator comprises, wherein
a feed-through terminal is bonded to a land of the wiring substrate, and an insertion terminal is swaged such that a coated portion and a core wire of the lead wire are pressure-bonded to bond the insertion terminal to the core wire of the lead wire,
the insertion terminal of the lead wire is arranged in the feed-through terminal bonded to the land, and
the insertion terminal of the lead wire is bonded to the feed-through terminal.

3. The power line connecting structure of the stator according to claim 1 or 2, wherein the feed-through terminal is a U-shaped terminal whose at least one side is opened.
